# EUROPEAN PATENT APPLICATION

(11) **EP 4 717 588 A1**
(43) Date of publication of application: **01.04.2026**
(21) Application number: 25198142.9
(22) Date of filing: 26.08.2025
(51) Int. Cl.: B64C 3/56, F16C 29/00, F16F 1/04

(54) **COMPLIANT MOUNT FOR AIRCRAFT EQUIPMENT**

(30) Priority: 25.09.2024 GB 202414094
(71) Applicant: Airbus Operations Limited, Bristol BS34 7PA (GB)
(72) Inventor: MORRELL, Paul, Bristol, BS34 7PA (GB)
(74) Representative: Mathys & Squire

(57) **Abstract**

A compliant mount for an aircraft, for attaching equipment (such as a latching unit, for example) to a structural member of the aircraft, the compliant mount comprising: a mounting member for attachment to the structural member of the aircraft; a receptacle for supporting the equipment, the receptacle being coupled to the mounting member along a longitudinal axis; and one or more spring elements arranged to resiliently bias the receptacle into alignment with the longitudinal axis and to allow angular movement of the receptacle away from the longitudinal axis. Also provided is an aircraft equipment assembly comprising such a compliant mount, and aircraft equipment supported by the receptacle, and an aircraft having one or more such equipment assemblies. The aircraft may be a folding wingtip aircraft and the equipment assembly may be part of a folding wingtip actuation mechanism.

## Description

### FIELD OF THE INVENTION

This invention relates to a compliant mount for attaching aircraft equipment to a structural member of the aircraft. The invention is particularly suitable, but by no means limited, for use in a folding wingtip aircraft, for mounting a latching unit that forms part of a folding wingtip actuation mechanism.

### BACKGROUND TO THE INVENTION

Commercial passenger aircraft are being developed that have folding wingtips, so as to allow the aircraft to have a longer overall wingspan than would conventionally be accommodated at passenger airports, e.g. due to wingspan limits at the airport gates or along taxiways. In turn, this may reduce aircraft fuel burn (as longer thinner wings can provide an improved lift to drag ratio), and may also enable larger bodied passenger aircraft (e.g. carrying more passengers and thereby reducing carbon emissions per passenger) to be accommodated by the airports.

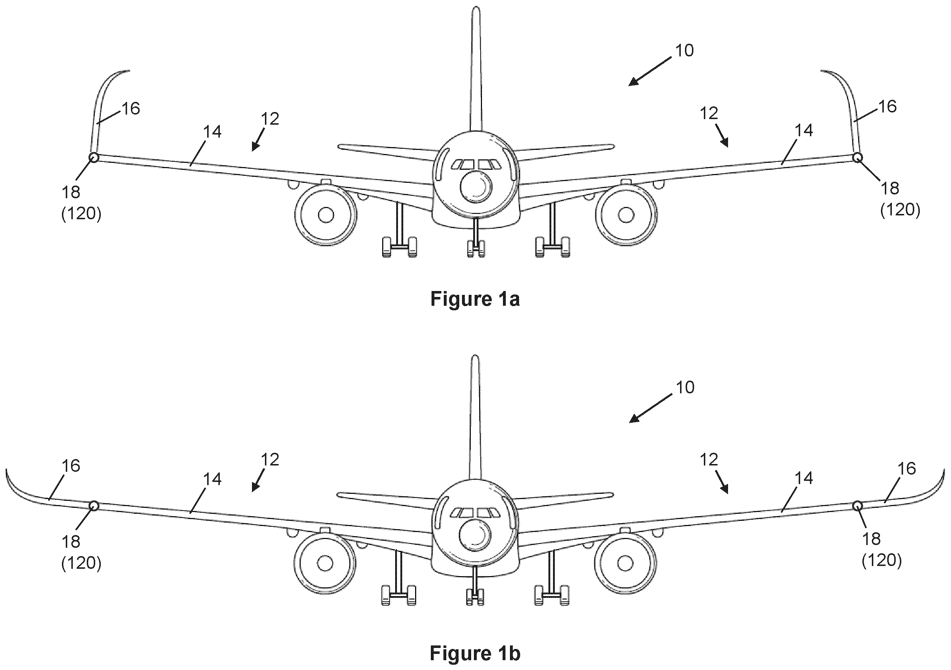

As shown for example in Figures 1a and 1b, such a folding wingtip aircraft 10 has a pair of folding wings 12, with each folding wing 12 having a main wing part 14 and a wingtip 16 that is foldable relative to the main wing part 14 by means of an actuation mechanism 18. Figure 1a shows the wingtips 16 in a folded (or raised) configuration, such that the effective wingspan of the aircraft (e.g. for the purpose of accessing an airport gate) is determined by the span of the main wing parts 14 and not the wingtips 16. Figure 1b shows the wingtips 16 in an unfolded (or lowered) configuration, such that the effective wingspan of the aircraft (e.g. for the purpose of taking-off, flying and landing) is determined by the span of the main wing parts 14 and the wingtips 16 combined. Naturally the effective wingspan in the unfolded configuration is greater than the effective wingspan in the folded configuration, so as to provide adequate lift for the aircraft during take-off, flight and landing. Typically the transition from the folded configuration to the unfolded configuration would take place on a taxiway or at a holding position, after the aircraft has left the gate and is preparing to take off. Similarly, the transition from the unfolded configuration to the folded configuration would typically take place in a rollout region of a runway, or on a taxiway, after the aircraft has landed and is preparing to approach the gate.

The actuation mechanism 18 of a folding wingtip aircraft typically includes a latching unit having a latch pin (also known as a latch bolt) that is extendable into an extended configuration to lock the angle of the wingtip 16 relative to the main wing part 14 (i.e. to lock the wingtip in either the folded configuration or the unfolded configuration). Conversely the latch pin is retractable into a retracted configuration to enable the angle of the wingtip 16 relative to the main wing part 14 to be adjusted (i.e. to transition the wing from the folded configuration to the unfolded configuration, or vice versa). The latch pin may be driven between the extended and retracted configurations by an electrohydraulic piston, for example, or another drive member. For instance, as alternatives to an electrohydraulic piston, the latch pin may be purely electrically driven, or purely hydraulically driven.

When driving the latch pin into the extended configuration, to lock the angle of the wingtip 16 relative to the main wing part 14, the latch pin is typically driven through one or more (and typically multiple) lugs attached to the end of the main wing part 14 and to the folding wingtip 16. In practice, these lugs may exhibit a small amount of misalignment, which may impede the passage of the latch pin when entering its extended configuration. Accordingly, there is a desire to enable a latching unit to tolerate some misalignment of the lugs as the latch pin is driven into its extended configuration.

It will be appreciated that such latching units having extendable and retractable latch pins may be used in applications other than for folding wing aircraft, and similar issues with misaligned components may apply. For example a latching unit (having a latching pin that is extendable through or into one or more receiving parts) may be used to lock a door of an aircraft or to secure a landing gear in a retracted or extended position. Moreover, aside from latching units, other aircraft parts may be slightly misaligned that are intended to receive a pin, bolt or other inserted member. Such an inserted member could be an actuated member (as is the case with a latch pin, for example) or a non-actuated member (e.g. a pin or bolt that is inserted during assembly of the aircraft). In all such cases, there is a desire to enable the inserted member to tolerate some misalignment of the part or parts though which (or into which) it is inserted.

### SUMMARY OF THE INVENTION

Aspects and embodiments of the present invention are set out in the appended claims.

According to a first aspect of the invention there is a provided a compliant mount for an aircraft, for attaching equipment (such as a latching unit, for example) to a structural member of the aircraft, the compliant mount comprising: a mounting member for attachment to the structural member of the aircraft; a receptacle for supporting the equipment, the receptacle being coupled to the mounting member along a longitudinal axis; and one or more spring elements arranged to resiliently bias the receptacle into alignment with the longitudinal axis and to allow angular movement of the receptacle away from the longitudinal axis.

The term "equipment" as used herein should be interpreted broadly, to encompass actuable equipment such as a latching unit, and also non-actuable equipment such as fixed pins or bolts.

By virtue of the angular movement of the receptacle enabled by the one or more spring elements, the equipment supported by the receptacle is able to tolerate a degree of misalignment of parts (such as lugs) with which the equipment is arranged to engage.

The aircraft may be a commercial passenger aircraft, for example an aircraft capable of transporting more than 50, for example more than 100 passengers. For the purposes of this application the term "commercial passenger aircraft" is also taken to include aircraft of the same type configured for cargo transport.

The mounting member may include a cavity in which receptacle is mounted, and which allows angular movement of the receptacle away from the longitudinal axis.

In the mounting member, the cavity may be defined by an annular wall around the longitudinal axis and a support region projecting inwards from the annular wall. The receptacle may have a cylindrical outer wall and an end region, and the end region of the receptacle may abut the support region of the mounting member.

Advantageously, the end region of the receptacle may include a cambered (curved or angled) region, and the support region of the mounting member may include a complementary cambered (curved or angled) region against which the end region of the receptacle is pivotable about the longitudinal axis. This facilitates a pivoting action of the receptacle relative to the mounting member.

The mounting member may have an axial channel extending through the support region.

The receptacle may have a hollow core in which the equipment is supported in use, and an axial channel extending from the hollow core through the end region.

Preferably the one or more spring elements include a radial spring element arranged around the receptacle, between the annular wall of the mounting member and the cylindrical outer wall of the receptacle, for radially biasing the receptacle and allowing radial movement of the receptacle.

Preferably the radial spring element comprises a wave spring.

Preferably the wave spring of the radial spring element is in the form of peaks and troughs, the peaks and troughs being oriented radially, orthogonal to the longitudinal axis.

Preferably the annular wall of the mounting member incorporates an annular recess (and optionally more than one such recess) in which the radial spring element is held.

The end region of the receptacle may project radially outwards from the cylindrical outer wall of the receptacle. As a consequence, the receptacle may advantageously be held captive within the cavity by the radial spring element.

Preferably the one or more spring elements include an axial spring element arranged around the support region of the mounting member, between the support region of the mounting member and the end region of the receptacle, for providing axial pretension of the compliant mount.

Preferably the axial spring element comprises a wave spring.

Preferably the wave spring of the axial spring element is in the form of peaks and troughs, the peaks and troughs being oriented axially about the longitudinal axis.

Preferably the support region of the mounting member incorporates an annular recess (and optionally more than one such recess) in which the axial spring element is held.

According to a second aspect of the invention there is provided an aircraft equipment assembly comprising the compliant mount according to the first aspect of the invention, and aircraft equipment supported by the receptacle.

The equipment may comprise a movable member longitudinally extendable along the axial channel through the end region of the receptacle, and along the axial channel through the support region of the mounting member, from a retracted configuration into an extended configuration.

By way of example, the equipment may be a latching unit (e.g. for a folding wingtip actuation mechanism) and the movable member may be a latch pin (also known as a latch bolt).

According to a third aspect of the invention there is provided a folding wing for an aircraft, the folding wing having a main wing part and a wingtip that is foldable relative to the main wing part by means of an actuation mechanism, wherein the actuation mechanism includes the latching unit as provided by the second aspect of the invention, wherein the latch pin in the extended configuration locks the angle of the wingtip relative to the main wing part, and wherein the latch pin in the retracted configuration enables the angle of the wingtip relative to the main wing part to be adjusted.

According to a fourth aspect of the invention there is provided a folding wingtip aircraft having one or more folding wings according to the third aspect of the invention. Although conventionally both wings of such an aircraft would be folding, depending on airport restrictions it is possible that only one wing would need to be folding, e.g. to enable the aircraft to approach a gate.

According to a fifth aspect of the invention there is provided an aircraft having one or more equipment assemblies according to the second aspect of the invention.

Finally, according to a sixth aspect of the invention there is provided a method of attaching equipment to a structural member of an aircraft using a compliant mount according to the first aspect of the invention, the method comprising (in no particular order): attaching the mounting member of the compliant mount to the structural member of the aircraft; and attaching the equipment to the receptacle of the compliant mount.

### BRIEF DESCRIPTION OF THE DRAWINGS

Embodiments of the invention will now be described, by way of example only, and with reference to the drawings in which:
Figure 1a is a schematic front view of a folding wingtip aircraft, of which the wingtips are in a folded configuration;
Figure 1b shows the aircraft of Figure 1a with the wingtips in an unfolded configuration;
Figure 2 is a schematic cross-sectional view of an example of a compliant mount for attaching equipment, such as a latching unit, to a structural member of an aircraft, the compliant mount comprising a mounting member, a receptacle for supporting the equipment in use, and spring elements that allow angular movement of the receptacle relative to the mounting member;
Figure 3 is a perspective view of the compliant mount of Figure 2;
Figure 4 is a perspective view of the receptacle and spring elements of the compliant mount of Figure 2;
Figure 5 is a perspective view of the receptacle and spring elements of the compliant mount of Figure 4, with a latching unit mounted in the receptacle;
Figure 6 is a longitudinal cross-sectional schematic view of the compliant mount of Figure 2 supporting a latching unit in a retracted configuration;
Figure 7a is a longitudinal cross-sectional schematic view of a compliant mount and latching unit as in Figure 6, with the latching unit in an extended configuration, with the latching pin passing through lugs that are aligned with the longitudinal axis of the mounting member; and
Figure 7b corresponds to Figure 7a but showing a degree of angular movement of the receptacle away from the longitudinal axis, to enable the latching pin to pass through misaligned lugs.

In the figures, like elements are indicated by like reference numerals throughout.

### DETAILED DESCRIPTION OF PREFERRED EMBODIMENTS

The present embodiments represent the best ways known to the Applicant of putting the invention into practice. However, they are not the only ways in which this can be achieved.

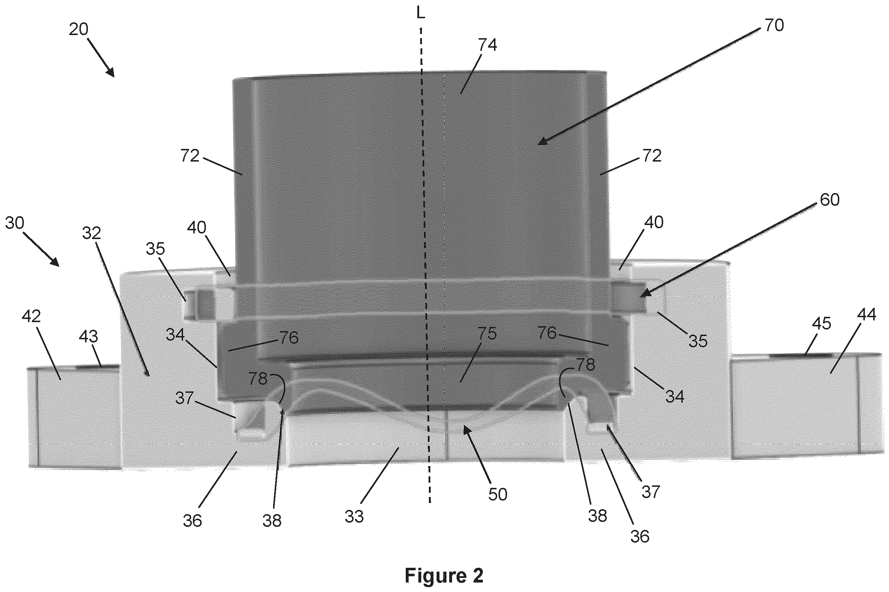

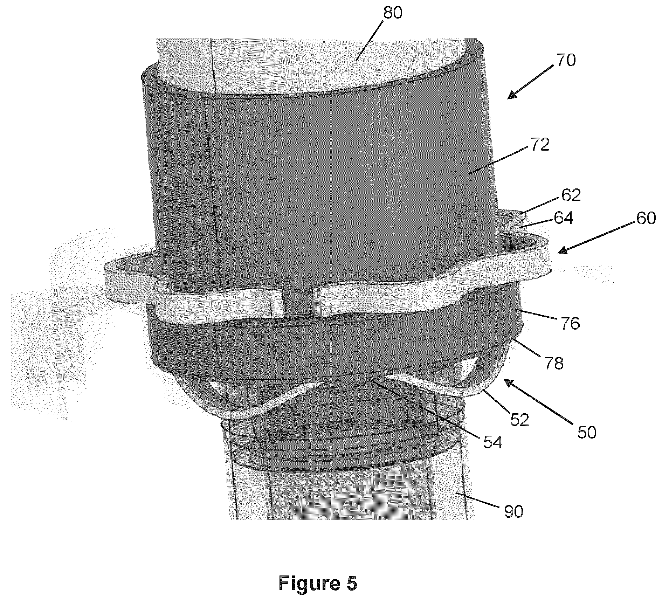

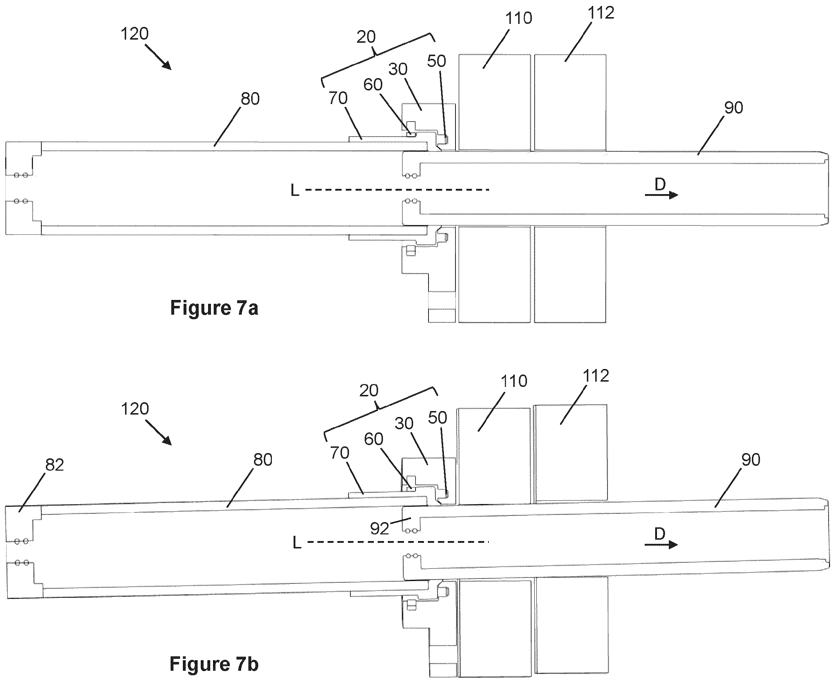

Figure 2 shows an example of a compliant mount 20 for an aircraft, for attaching equipment such as a latching unit (80, 90 in Figures 5, 6, 7a and 7b) to a structural member of the aircraft whilst permitting a degree of angular movement or angular displacement of the equipment, e.g. to allow for misalignment of lugs (110, 112 in Figures 7a and 7b) or other members through which (or into which) the equipment is to pass. In use, the structural member of the aircraft to which the mount is attached may be, for example, a spar within a wing, or a first lug of a series of lugs which form part of a folding wingtip actuation mechanism.

The compliant mount 20 comprises, as separate components, a mounting member 30 for attachment to the structural member of the aircraft, and a receptacle 70 for supporting the equipment. The mounting member 30 and the receptacle 70 would typically be made of metals of suitable strength and hardness. The receptacle 70 is coupled to the mounting member 30 along a longitudinal axis L. The compliant mount 20 further comprises one or more spring elements arranged to resiliently bias the receptacle 70 into alignment with the longitudinal axis L and to allow angular movement of the receptacle 70 away from the longitudinal axis L. In the illustrated example, the compliant mount 20 comprises two such spring elements 50, 60, although in alternative examples only a single spring element may be provided. In other examples more than two spring elements may be employed.

The longitudinal axis L may be considered to be the ideal orientation of the receptacle 70 and the equipment mounted therein, corresponding to the case when the members through which the equipment is to pass are accurately aligned and thus no angular movement of the equipment away from the longitudinal axis L is necessary.

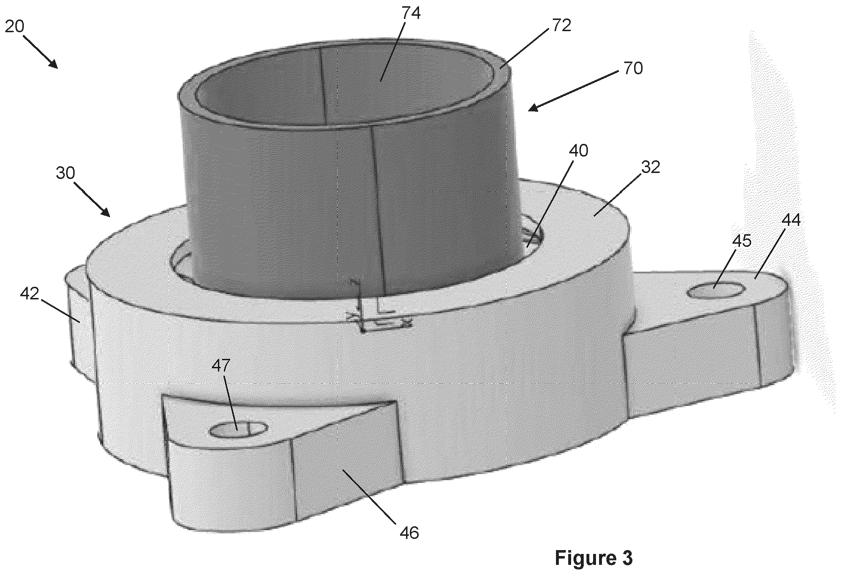

Referring also to Figure 3 as well as Figure 2, in the illustrated example the mounting member 30 comprises a mounting ring 32 and three lugs 42, 44, 46 projecting outwardly from the mounting ring 32. The underside of each of the lugs 42, 44, 46 is level with the underside of the mounting ring 32. Each lug 42, 44, 46 has a respective hole 43, 45, 47 therethrough, by means of which the mounting member 30 may be securely attached to the structural member of the aircraft, e.g. using bolts or other fasteners. It will of course be appreciated that alternative arrangements are possible for attaching the mounting member 30 to the structural member of the aircraft. For example, a different number of lugs (such as two or four lugs) may be provided instead of the illustrated three. In other examples, alternative mounting configurations such as bayonet mounts, clamped elements or keyways may be employed.

The mounting member 30 may be manufactured as a single unitary structure or produced as an assembly of component parts.

Within the mounting ring 32, the mounting member 30 includes a cavity 40 in which the receptacle 70 is mounted, and which allows angular movement of the receptacle 70 away from the longitudinal axis L. In the illustrated example the cavity 40 is primarily defined by an annular internal wall 34 within the mounting ring 32, around the longitudinal axis L, and a support region 36 projecting radially inwards from the annular wall 34. Expressed differently, the support region 36 may be considered to be an inwardly-projecting flange, the underside of which forms the underside of the mounting ring 32. The mounting member 30 has an axial channel 33 extending through the support region 36. Accordingly, the axial channel 33 is in communication with the cavity 40 in which the receptacle 70 is mounted. The axial channel 33, and the cavity 40 in which the receptacle 70 is mounted, are both aligned concentrically with the longitudinal axis L. Together, the axial channel 33 and the cavity 40 extend axially through the whole of the mounting member 30.

In the illustrated example the receptacle 70 has a cylindrical outer wall 72 and an end region 76. The end region 76 projects radially outwards, and, at the far end of the end region 76, also has a part that extends radially inwards, forming an inwardly-projecting flange. Within the cylindrical outer wall 72, the receptacle 70 has a hollow core 74 in which the equipment is supported in use, with the equipment abutting the inwardly-projecting flange part of the end region 76. Further, an axial channel 75 extends from the hollow core 74 through the inwardly-projecting flange part of the end region 76. The hollow core 74 and the axial channel 75 are both arranged concentrically about the longitudinal axis L when the receptacle 70 is not angularly displaced relative to the mounting member 30. Together, the hollow core 74 and the axial channel 75 extend axially through the whole of the receptacle 70.

Within the compliant mount 20, the end region 76 of the receptacle 70 abuts the support region 36 of the mounting member 30. In this regard, in the illustrated example, the inwardly-projecting flange part of the end region 76 includes, on its underside, a cambered (curved or angled) region 78. Likewise, the support region 36 of the mounting member 30 includes a complementary cambered (curved or angled) region 38 around the rim of the channel 33, against which the cambered region 78 of the receptacle 70 is pivotable about the longitudinal axis L.

The surfaces of the mounting member 30 and/or the receptacle 70 that come into contact with one another may be coated with a suitable material, to reduce friction between the mounting member 30 and the receptacle 70.

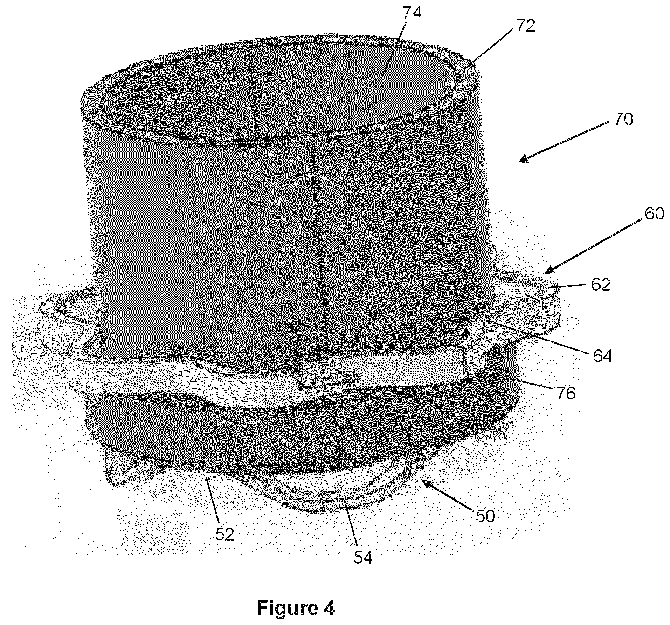

With reference now to Figure 4 as well as Figure 2, to resiliently bias the receptacle 70 into alignment with the longitudinal axis L whilst allowing angular (i.e. radial) movement of the receptacle 70 away from the longitudinal axis L, the illustrated example of the compliant mount 20 includes a radial spring element 60 arranged around the circumference of the receptacle 70, between the annular wall 34 of the mounting member 30 and the cylindrical outer wall 72 of the receptacle 70.

Preferably, as illustrated, the radial spring element 60 comprises a wave spring. Adopting terminology from the physics of waves, the wave spring of the radial spring element 60 is in the form of peaks (or crests) 62 and troughs 64, with the peaks 62 and troughs 64 being oriented radially, orthogonal to the longitudinal axis L. The peaks 62 press against the annular wall 34 of the mounting member 30 and the troughs 64 press against the cylindrical outer wall 72 of the receptacle 70. In the illustrated example the wave spring forming the radial spring element 60 has eight peaks and eight troughs, which provide a good, even, degree of biasing of the receptacle in all directions. However, in alternative examples the number of peaks and troughs may be varied from eight if so desired.

Furthermore, in the illustrated example the radial spring element 60 is a single continuous spring, although in alternative examples it may be made replaced by a series of shorter discrete spring members arranged around the circumference of the receptacle 70.

As shown in Figure 2, in the illustrated example the annular internal wall 34 of the mounting member 30 incorporates an annular recess 35 in which the radial spring element 60 is held. In an alternative example, rather than providing a single continuous annular recess 35, a plurality of discrete recesses may be provided around the annular wall 34 of the mounting member 30, with each discrete recess located to receive a respective peak 62 of the radial spring element 60.

As mentioned above and as shown in Figures 2 and 4, in the illustrated example the end region 76 of the receptacle 70 projects radially outwards from the cylindrical outer wall 72 of the receptacle 70. The length of the end region 76 along the longitudinal axis L is a little less than the depth of the annular wall 34 beneath the annular recess 35 (i.e. the extent of the annular wall 34 between the annular recess 35 and the inwardly-projecting support region 36). As a consequence, the end region 76 of the receptacle 70 is held captive within the cavity 40 by the radial spring element 60. This function of the radial spring element 60 is in addition to the radial spring element 60 resiliently biasing the receptacle 70 into alignment with the longitudinal axis L whilst allowing angular movement of the receptacle 70 away from the longitudinal axis L.

To provide axial pretension of the of receptacle 70 within the mounting member 30, the illustrated example of the compliant mount 20 also includes an axial spring element 50 arranged around the support region 36 of the mounting member 30 (i.e. around the circumference of the axial channel 33), between the support region 36 of the mounting member 30 and the end region 76 of the receptacle 70.

Preferably, as illustrated, the axial spring element 50 comprises a wave spring. The wave spring of the axial spring element 50 is in the form of peaks 52 and troughs 54, with the peaks 52 and troughs 54 being oriented axially about the longitudinal axis L (i.e. orthogonal to the orientation of the peaks 62 and troughs 64 of the radial spring element 60). The peaks 52 press against the underside of the end region 76 of the receptacle 70 and the troughs 54 press against the support region 36 of the mounting member 30. In the illustrated example the wave spring forming the axial spring element 50 has four peaks and four troughs, which provide a good, even, degree of axial pretensioning of the receptacle 70. However, in alternative examples the number of peaks and troughs may be varied from four if so desired.

Furthermore, in the illustrated example the axial spring element 50 is a single continuous spring, although in alternative examples it may be made replaced by a series of shorter discrete spring members arranged around the support region 36 of the mounting member 30 (i.e. around the circumference of the axial channel 33).

As shown in Figure 2, in the illustrated example the support region 36 of the mounting member 30 incorporates an annular recess 37 in which the axial spring element 50 is held. In an alternative example, rather than providing a single continuous annular recess 37, a plurality of discrete recesses may be provided around the support region 36 of the mounting member 30, with each discrete recess located to receive a respective trough 54 of the axial spring element 50. As well as holding the axial spring element 50 in place, the annular recess 37 also helps to make the mounting member 30 more compact along the axial direction.

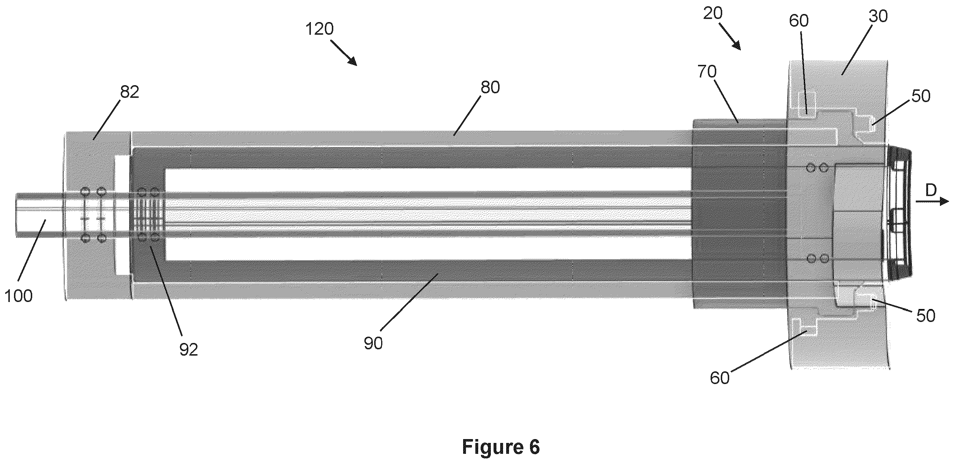

Figure 5 illustrates the receptacle 70 (with spring elements 50 and 60 in place) supporting an item of equipment, namely a latching unit 80, 90. Reference is also made to Figures 6, 7a and 7b, which show such a latching unit 80, 90 installed within the compliant mount 20, thereby forming an equipment assembly 120. In the present description the latching unit 80, 90 and indeed the overall equipment assembly 120 will primarily be described as being part of a folding wingtip actuation mechanism 18, e.g. for a folding wingtip aircraft 10 as shown in Figures 1a and 1b, in which the actuation mechanism 18 controls the folding of a wingtip 16 relative to a main wing part 14. However, in other examples the latching unit 80, 90 and equipment assembly 120 may be for a different purpose, e.g. for locking a door of an aircraft or to secure a landing gear in a retracted or extended position.

The latching unit comprises an external body part 80 and a latch pin 90 that is extendable from, and retractable into, the body part 80 when driven by an electrohydraulic piston 100 or other drive member (shown in Figure 6 and omitted from Figures 7a and 7b). The body part 80 and the latch pin 90 are substantially in the form of hollow cylindrical members, with the latch pin 90 being concentrically and slidably mounted within the body part 80.

In Figure 6 the latch pin 90 is shown in its retracted configuration, within the body part 80, whereas in Figures 5, 7a and 7b the latch pin 90 is shown in its extended configuration. It may be noted that, when in its extended configuration, the latch pin 90 extends from the body part 80 on the opposite side of the compliant mount 20 to the body part 80. In other words, the body part 80 is mounted to one side of the compliant mount 20 (i.e. the side of the receptacle 70) and the direction of extension of the latch pin 90 is to the opposite side, through the compliant mount 20.

The external diameter of the body part 80 corresponds to the internal diameter of the receptacle 70, such that the body part 80 is held tightly within the receptacle 70. Mechanical fasteners and/or adhesive may be used to securely fasten the body part 80 within the receptacle 70. As may be seen from Figure 7a, for example, the internal diameter of the body part 80 is slightly smaller than the internal diameter of the axial channel 33 extending through the support region 36 of the mounting member 30. The external diameter of the latch pin 90 is marginally less than the internal diameter of the body part 80, so as to provide a sliding fit of the latch pin 90 within the body part 80.

As shown in Figure 6, the body part 80 has a cap 82 through which the electrohydraulic piston 100 can slidably pass. Similarly, the latch pin 90 has a head 92 through which the piston 100 passes, with the piston 100 being fixedly connected within the latch pin 90 (e.g. at the forward end of the latch pin 90).

When transitioning from the retracted configuration of Figure 6 to the extended configuration of Figures 5, 7a and 7b, the latch pin 90 is longitudinally driven (in direction D of Figures 7a and 7b) along the axial channel 75 through the end region 76 of the receptacle 70, and along the axial channel 33 through the support region 36 of the mounting member 30.

Referring to the example of a folding wingtip actuation mechanism, and with reference to Figures 1a, 1b, 7a and 7b, when transitioning to the extended configuration the latch pin 90 is driven in direction D through one or more lugs 110, 112 that are attached to the end of the main wing part 14 and to the folding wingtip 16, to thereby lock the angle of the wingtip 16 relative to the main wing part 14.

Figure 7a depicts an ideal scenario in which the lugs 110, 112 are properly aligned with the longitudinal axis L of the mounting member 30. In this situation, the latch pin 90 can be driven in direction D, through the lugs 110, 112, without any need for angular movement of the receptacle 70 relative to the mounting member 30. Accordingly, the spring elements 50, 60 simply retain the receptacle 70 in biased alignment with the longitudinal axis L.

On the other hand, Figure 7b depicts a scenario in which the lugs 110, 112 are not properly aligned with the longitudinal axis L of the mounting member 30. In particular, lug 112 is displaced relative to lug 110. In this situation, the latch pin 90 can still be driven in direction D, through the misaligned lugs 110, 112, by virtue of the spring elements 50, 60 allowing a degree of angular movement of the receptacle 70 away from the longitudinal axis L.

When retracting the latch pin 90, to unlock the wingtip 16 from the main wing part 14 and thereby permit the wingtip 16 to be raised or lowered, the above process is reversed. Again, the spring elements 50, 60 allowing a degree of angular movement of the receptacle 70 away from the longitudinal axis L is advantageous when retracting the latch pin 90 from misaligned lugs 110, 112, as in the case of Figure 7b.

In the present examples, the extent of the angular movement of the receptacle 70 away from the longitudinal axis L, as enabled by the compliant mount 20, is typically less than 10°, and would generally be expected to be around 5° or less. For example, the receptacle 70 may move by 1°, 2°, 3°, 4°, 5°, 6°, 7°, 8°, 9° or 10° from the longitudinal axis L. The extent of the radial deflection of the receptacle 70 from the longitudinal axis L may be about 1 mm.

Thus, the presently-described compliant mount 20 provides an acceptable but limited amount of compliance, enabling equipment mounted in the receptacle 70 to tolerate a degree of misalignment of parts (such as lugs 110, 112) with which the equipment is arranged to engage. Compared to other solutions for providing compliance, the present mount 20 is relatively small in comparison to a typical mechanical gimbal, and is not susceptible to the disadvantages of rubber mounts (such as degradation through environmental conditions and ageing).

### Modifications and alternatives

Detailed embodiments and some possible alternatives have been described above. As those skilled in the art will appreciate, a number of modifications and further alternatives can be made to the above embodiments whilst still benefiting from the inventions embodied therein.

For instance, in the above examples the equipment assembly 120, of which the compliantly-mounted latching unit 80, 90 is a part, is primarily described as being part of a folding wingtip actuation mechanism. However, in other examples a latching unit may be mounted using the present compliant mount 20 for a different purpose, e.g. for locking a door of an aircraft or to secure a landing gear in a retracted or extended position. In other examples the present compliant mount 20 may used to support a non-actuated member, such as a pin or bolt that is inserted into or through parts during assembly of an aircraft, to allow for manufacturing tolerances in the position or alignment of such parts.

In the above examples the spring elements 50, 60 are wave springs, which are compact, provide suitable biasing of the receptacle 70, and enable sufficient angular movement of the receptacle 70 away from the longitudinal axis L. However, in other examples, alternative types of springs may be used for the spring elements 50, 60, such as helical springs, rubber or elastomeric springs, or coil springs. Wave springs (made of metal) are generally preferred over coil springs, though, since wave springs can still perform their intended function even if they develop a crack, whereas a cracked coil spring would considerably lose its efficacy. Moreover, rubber or elastomeric springs may be susceptible to degradation and ageing, whereas metal wave springs are not. Consequently, metal wave springs are presently preferred for the spring elements 50, 60.

## Claims

1. A compliant mount for an aircraft, for attaching equipment to a structural member of the aircraft, the compliant mount comprising:
a mounting member for attachment to the structural member of the aircraft;
a receptacle for supporting the equipment, the receptacle being coupled to the mounting member along a longitudinal axis; and
one or more spring elements arranged to resiliently bias the receptacle into alignment with the longitudinal axis and to allow angular movement of the receptacle away from the longitudinal axis;
wherein the mounting member includes a cavity in which receptacle is mounted, and which allows angular movement of the receptacle away from the longitudinal axis.

2. The compliant mount according to claim 1 wherein, in the mounting member, the cavity is defined by an annular wall around the longitudinal axis and a support region projecting inwards from the annular wall;
wherein the receptacle has a cylindrical outer wall and an end region; and
wherein the end region of the receptacle abuts the support region of the mounting member.

3. The compliant mount according to claim 2, wherein the end region of the receptacle includes a cambered region and wherein the support region of the mounting member includes a complementary cambered region against which the end region of the receptacle is pivotable about the longitudinal axis.

4. The compliant mount according to claim 3, wherein the mounting member has an axial channel extending through the support region.

5. The compliant mount according to claim 4, wherein the receptacle has a hollow core in which the equipment is supported in use, and an axial channel extending from the hollow core through the end region.

6. The compliant mount according to any of claims 2 to 5, wherein said one or more spring elements include a radial spring element arranged around the receptacle, between the annular wall of the mounting member and the cylindrical outer wall of the receptacle.

7. The compliant mount according to claim 6, wherein the radial spring element comprises a wave spring.

8. The compliant mount according to claim 6 or claim 7, wherein the annular wall of the mounting member incorporates an annular recess in which the radial spring element is held.

9. The compliant mount according to any of claims 6 to 8, wherein the end region of the receptacle projects radially outwards from the cylindrical outer wall of the receptacle;
optionally wherein the end region of the receptacle is held captive within the cavity by the radial spring element.

10. The compliant mount according to any of claims 2 to 9, wherein said one or more spring elements include an axial spring element arranged around the support region of the mounting member, between the support region of the mounting member and the end region of the receptacle.

11. The compliant mount according to claim 10, wherein the axial spring element comprises a wave spring.

12. The compliant mount according to claim 10 or claim 11, wherein the support region of the mounting member incorporates an annular recess in which the axial spring element is held.

13. An aircraft equipment assembly comprising the compliant mount according to claim 5 or according to any of claims 6 to 12 when dependent on claim 5, and aircraft equipment supported by the receptacle.
wherein the equipment comprises a movable member longitudinally extendable along the axial channel through the end region of the receptacle, and along the axial channel through the support region of the mounting member, from a retracted configuration into an extended configuration;
wherein the equipment is a latching unit and wherein the movable member is a latch pin.

14. A folding wing for an aircraft, the folding wing having a main wing part and a wingtip that is foldable relative to the main wing part by means of an actuation mechanism, wherein the actuation mechanism includes the aircraft equipment assembly according to claim 13,
wherein the latch pin in the extended configuration locks the angle of the wingtip relative to the main wing part, and
wherein the latch pin in the retracted configuration enables the angle of the wingtip relative to the main wing part to be adjusted.

15. A folding wingtip aircraft having one or more folding wings according to claim 14.
